# EUROPÄISCHE PATENTSCHRIFT

(11) **EP 1 264 723 B1**
(45) Veröffentlichungstag und Bekanntmachung des Hinweises auf die Patenterteilung: **16.08.2006**
(21) Anmeldenummer: 02010225.7
(22) Anmeldetag: 16.05.2002
(51) Int. Cl.: B60J 7/053, B60J 7/00

(54) **Fahrzeugdach mit einem verstellbaren Schliesselement**
Vehicle roof with a movable closing element
Toit de véhicule avec un élément de fermeture déplaçable

(30) Priorität: 05.06.2001 DE 10127117
(43) Veröffentlichungstag der Anmeldung: 11.12.2002
(73) Patentinhaber: Webasto Vehicle Systems International GmbH, 82131 Stockdorf (DE)
(72) Erfinder: Seifert, Wolfgang, 82110 Germering (DE)
(74) Vertreter: Wiese, Gerhard

(56) Entgegenhaltungen:
- EP-A- 1 010 560
- DE-A- 3 442 599
- DE-A- 3 444 606
- DE-A- 19 906 516

## Beschreibung

Die vorliegende Erfindung betrifft ein Fahrzeugdach mit einem verstellbaren Schließelement und einer Wasserrinne gemäß dem Oberbegriff von Anspruch 1.

Üblicherweise ist bei gattungsgemäßen öffnungsfähigen Fahrzeugdächern im Bereich des hinteren Endbereichs des Schließelements bzw. am hinteren Rand der Dachöffnung eine als Festelement ausgebildete Wasserrinne vorgesehen, welche Wasser in diesem Bereich auffangen und am Eindringen in den Fahrzeuginnenraum hindern soll.

Aus der DE 37 06 917 A1 ist ein gattungsgemäßes Schiebehebedach bekannt, bei welchem die Wasserrinne an einem mit der den Deckel tragenden Führungskulisse verbundenen, in Dachlängsrichtung geführten Gleitstück angeordnet ist und mittels eines Hebels schwenkbar bezüglich der Führungskulisse und dem Gleitstück gelagert ist. Mittels dieser Konstruktion wird beim Ausstellen der Dekkelhinterkante der die Wasserrinne tragende Hebel im vorderen Bereich nach oben verschwenkt, wodurch die Wasserrinne mit ihrem vorderen Ende nach oben über das Dachniveau verschwenkt wird, um einen Schwallwasserschutz gegenüber auf dem Fahrzeugdach befindlichem Wasser zu realisieren. Eine ähnliche gattunggemäße Konstruktion ist aus der DE 34 42 599 C2 bekannt.

Bei einer abgewandelten Konstruktion gemäß der GB 2 221 198 A ist zwar die Wasserrinne selbst nicht verschwenkbar, jedoch ist ein Wasserauffangelement vorgesehen, welches oberhalb der Wasserrinne vorgesehen ist und mittels einer Blattfeder so an der Wasserrinne befestigt ist, dass das Wasserauffangelement mittels der Vorspannung der Blattfeder bei ausgestellter Deckelhinterkante nach oben schwenkt, um einen Schwallwasserschutz zu erzielen.

Aus der EP 0 856 424 A2 ist ein Schiebehebedach bekannt, bei welchem die Wasserrinne für den hinteren Deckelendbereich mittels eines federnden Verbindungsarms an dem Deckel befestigt ist. Die Wasserrinne untergreift bei geschlossenem Deckel bzw. bei ausgestelltem Deckel den hinteren Rand der Dachöffnung, wobei in letzterem Fall die Wasserrinne aufgrund der Elastizität des Verbindungsarms im wesentlichen unterhalb des Dachniveaus verbleibt. Beim Absenken des hinteren Deckelendbereichs unter das Dachniveau wird die Wasserrinne mit abgesenkt.

Aus der DE 89 15 197 U1 ist ein Schiebedach bekannt, bei welchem die fest angebrachte Wasserrinne im Bereich ihrer vorderen Wange mit elastischen Dämpfungselementen versehen ist, um Klappergeräusche durch Anschlagen des Dekkels an der Wasserrinne zu verhindern.

Es ist Aufgabe der vorliegenden Erfindung, ein Fahrzeugdach mit verstellbarem Schließelement und Wasserrinne zu schaffen, bei welchem der Bauraumbedarf im Bereich des hinteren Endbereichs des Schließelements bzw. im Bereich der Wasserrinne möglichst gering gehalten werden kann und dennoch ein guter Wassereindringschutz erzielt werden kann.

Diese Aufgabe wird erfindungsgemäß gelöst durch ein Fahrzeugdach, wie es in Anspruch 1 definiert ist. Bei dieser erfindungsgemäßen Lösung ist vorteilhaft, dass dadurch, dass der vordere Wasserrinnenbereich mittels des flexiblen Bereichs gegenüber dem hinteren Wasserrinnenbereich verschwenkbar ist, es nicht erforderlich ist, die Wasserrinne als Ganzes schwenkbar zu gestalten, wodurch Bauraum eingespart werden kann. Insbesondere kann die Wasserrinne dabei so ausgebildet sein, dass sie den hinteren Verstärkungsbereich eines Glasdeckels untergreift.

Besonders vorteilhaft kann die Erfindung für ein Dach mit zwei Glasdeckeln verwendet werden, wobei die Wasserrinne dann vorzugsweise sowohl den hinteren Verstärkungsbereich des vorderen Glasdeckels als auch den vorderen Verstärkungsbereich des hinteren Glasdeckels bzw. Glasfestelements untergreift.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- FIG. 1: einen Längsschnitt im Bereich der Wasserrinne im hinteren Endbereich des vorderen Deckels eines öffnungsfähigen Fahrzeugdaches, wobei sich der vordere Deckel in Schließstellung befindet;
- FIG. 2: eine Ansicht wie FIG. 1, wobei jedoch der vordere Deckel in einer Stellung gezeigt ist, in welcher die Deckelhinterkannte abgesenkt ist;
- FIG. 3: eine Ansicht wie FIG. 1, wobei jedoch der vordere Deckel in einer Stellung gezeigt ist, in welcher die Deckelhinterkante nach oben ausgestellt ist;
- FIG. 4: eine Aufsicht auf die Wasserrinne von FIG. 1 bis 3;
- FIG. 5: schematisch einen Längsschnitt des gesamten Fahrzeugdaches, wobei der vordere Deckel in seiner Schließstellung gezeigt ist; und
- FIG. 6: eine Ansicht wie FIG. 5 wobei der vordere Deckel jedoch in einer Stellung gezeigt ist, in welcher er unter den hinteren Deckel geschoben ist.

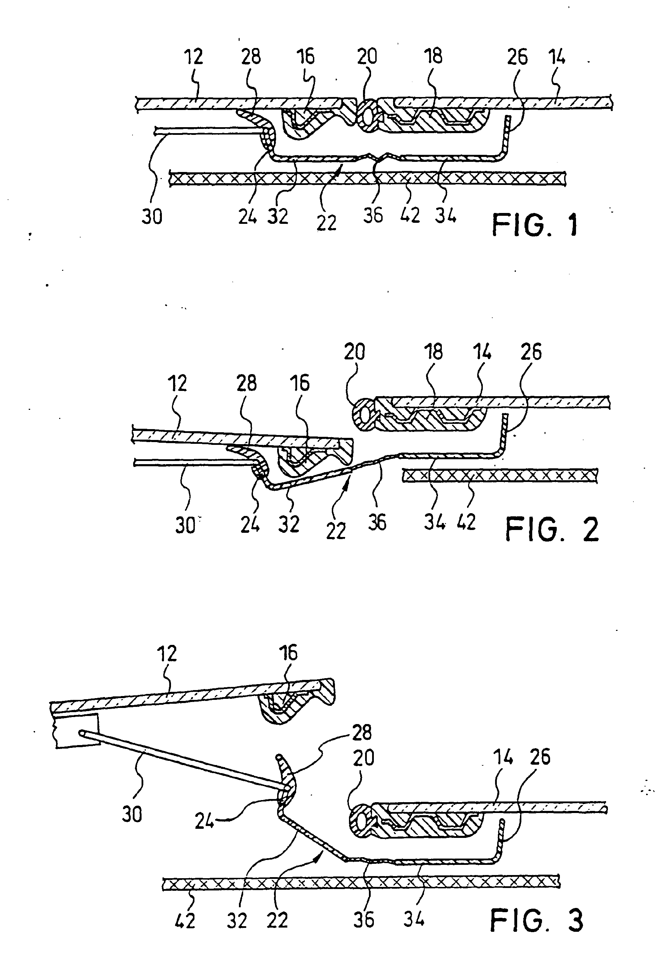

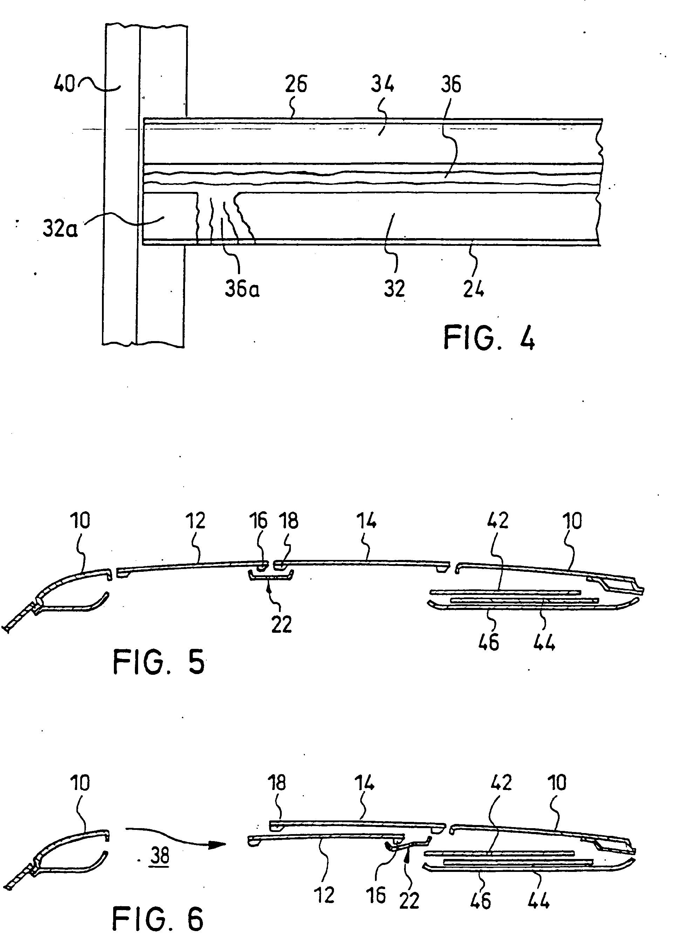

Gemäß FIG. 1 und 5 umfasst ein öffnungsfähiges Fahrzeugdach eine feste Dachhaut 10, welche eine Dachöffnung 38 aufweist, die in FIG. 5 von einem vorderen Deckel 12 und einem dahinter angeordneten hinteren Deckel 14 verschlossen wird, die beide als transparente Deckel, vorzugsweise als Glasdeckel, ausgebildet sind. Der vordere Deckel 12 ist in seinem hinteren Endbereich mit einer Verstärkung 16 versehen, während der hintere Deckel 14 in seinem vorderen Endbereich mit einer Umschäumung bzw. Verstärkung 18 versehen ist, welche an ihrem vorderen Ende ein Hohlkammerdichtungselement 20 zur Abdichtung des Stoßes zwischen dem vorderen Deckel 12 und dem hinteren Deckel 14 trägt. Die Verstärkungen 16 und 18 und das Dichtungselement 20 sind nicht-transparent ausgebildet.

Im Bereich unterhalb des Stoßes zwischen den beiden Deckeln 12 und 14 ist eine Wasserrinne 22 vorgesehen, welche in Dachquerrichtung verläuft und im Schnitt im wesentlichen U-förmig ausgebildet ist, wobei der Basisbereich bzw. der Grund der Wasserrinne 22 vorne und hinten von einer vorderen bzw. hinteren Wange 24 bzw. 26 begrenzt wird. Die vordere Wange 24 trägt an ihrer Oberseite eine Dichtungslippe 28, welche in der in den FIG. 1 und 5 gezeigten Schließstellung an der Unterseite des vorderen Deckels 12 anliegt. Ferner ist die vordere Wange 24 mit einem Ausstellhebel 30 verbunden, der seinerseits an dem vorderen Deckel 12 bzw. dessen Ausstellmechanik angreift.

Die Wasserrinne 22 umfasst im wesentlichen drei Bereiche: einen vorderen festen Wasserrinnen bereich (Wasserrinnenabschnitt) 32, der die vordere Wange 24 und den vorderen Teil des Basisabschnitts umfasst, einen hinteren Wasserrinnenbereich (Wasserrinnenabschnitt) 34, der die hintere Wange 26 und einen hinteren Abschnitt des Basisabschnitts umfasst, sowie einen flexiblen Bereich 36, welcher wasserundurchlässig ist und den vorderen Wasserrinnenbereich 32 mit dem hinteren Wasserrinnenbereich 34 verbindet. Der flexible Bereich 36 erstreckt sich dabei in Dachquerrichtung, siehe auch FIG. 4, und kann beispielsweise balgähnlich ausgestaltet sein. Die Wasserrinne 22 ist so dimensioniert, dass sie den gesamten nichttransparenten Bereich im Bereich des Deckelstoßes, d.h. die Verstärkungen 16 und 18 und die Dichtung 20, zum Fahrzeuginnenraum hin verdeckt. Die Verstärkungen 16 und 18 sind jeweils möglichst nahe an dem jeweiligen Deckelende angeordnet, um die Ausdehnung des nicht-transparenten Bereiches zu minimieren. Die Wasserrinne 22 wird bevorzugt aus einem 2-Komponenten Kunststoff derart hergestellt, daß der vordere Festbereich 32 und der hintere Wasserrinnenbereich 34 aus einem festen Kunststoff und der flexible Bereich 36 aus einem weichen, elastischen Kunststoff besteht. Hierfür bietet sich zur Herstellung ein Zweikomponentenspritzverfahren an.

Der vordere Deckel 12 ist vorzugsweise als Schiebehebedeckel ausgebildet, d.h. er kann aus der Schließstellung wahlweise mit seiner Deckelhinterkante ausgestellt werden oder nach Absenken der Deckelhinterkante unter den hinteren Dekkel 14 geschoben werden, um eine vordere Dachöffnung 38 (siehe FIG. 6) freizulegen. Der hintere Deckel 14 ist vorzugsweise als Ausstelldeckel, d.h. mit ausstellbarer Hinterkante, oder als Spoilerdeckel ausgebildet, d.h. der Deckel kann mit ausgestellter Hinterkante nach hinten geschoben werden. Alternativ kann der hintere Deckel 14 jedoch auch als Festelement, d.h. nicht verstellbar, ausgebildet sein.

Die Wasserrinne 22 ist mit dem hinteren Wasserrinnenbereich 34 gemäß FIG. 4 in einer im wesentlichen horizontal in Dachlängsrichtung verlaufenden Führungsschiene 40 geführt, so dass die Wasserrinne 22 mit dem vorderen Deckel 12 zusammen nach hinten unter den hinteren Deckel 14 geschoben werden kann, wie dies in FIG. 6 angedeutet ist.

Der flexible Bereich 36, der gemäß FIG. 4 etwa in der Mitte der Wasserrinne 32 angeordnet ist, hat die Funktion, ein Verschwenken des vorderen Wasserrinnenbereichs 32 bezüglich des hinteren Wasserrinnenbereichs 34 zu ermöglichen. Bei der gezeigten Ausführungsform ist dabei, wie oben bereits erwähnt, der hintere Wasserrinnenbereich 34 in der Führungsschiene 40 geführt und dabei nicht-schwenkbar ausgebildet, während der vordere Wasserrinnenbereich 32 mittels des flexiblen Bereichs 36 bezüglich des hinteren Wasserrinnenbereichs 34 nach oben bzw. nach unten schwenkbar ist.

Gemäß FIG. 5 beginnt das Öffnen des vorderen Deckels 12 damit, dass zwei Schiebehimmel 42 und 44, die in der in FIG. 1 gezeigten Schließstellung hintereinanderliegend unterhalb des vorderen Deckels 12 bzw. des hinteren Deckels 14 angeordnet sind, um die Dachöffnung bezüglich des Fahrzeuginnenraums abzudecken, nach hinten geschoben werden, wobei gemäß FIG. 5 in der Endstellung beide Schiebedeckel übereinanderliegend in einer Ablage 46 angeordnet sind. Sobald der vordere Schiebehimmel 42 hinter den flexiblen Bereich 36 der Wasserrinne 22 geschoben wurde, kann ein Absenken des mit der Verstärkung 16 versehenen hinteren Endbereichs des vorderen Deckels 12 erfolgen, wobei die Unterseite der Verstärkung 16 von oben zur Anlage an den vorderen Wasserrinnenbereich 32 gelangt und diesen mit nach unten drückt bzw. nach unten verschwenkt, wie dies in FIG. 2 dargestellt ist. Dabei kann der vordere Wasserrinnenbereich 32 unter das Niveau des vorderen Schiebehimmels 42 gedrückt werden. Ausgehend von der in FIG. 2 gezeigten Stellung kann dann der vordere Dekkel 12 in die in FIG. 6 gezeigte Stellung gebracht werden, in welcher er zusammen mit der Wasserrinne 22 nach hinten unter den hinteren Deckel 14 geschoben wurde.

Wenn dagegen der vordere Deckel 12 ausgehend von der in FIG. 1 gezeigten Schließstellung mit seiner Hinterkante ausgestellt werden soll, kann der vordere Schiebehimmel 42 grundsätzlich auch mindestens zum Teil geschlossen bleiben. Der Ausstellhebel 30 wird durch die Ausstellbewegung des vorderen Deckels 12 bzw. der Ausstellbewegung der entsprechenden Deckelmechanik dazu veranlasst, den vorderen Wasserrinnenbereich 32 ein Stück weit nach oben mitzunehmen, d.h. ein Stück weit auszustellen, wobei gemäß FIG. 3 die vordere Wange 24 über das Niveau des hinteren Deckels 14 angehoben wird. In dieser Stellung wirkt die Wasserrinne 22 als Schwallwasserschutz für Wasser, welches z.B. bei Bremsbewegungen von der Oberseite des hinteren Deckels 14 in die Dachöffnung gelangen könnte.

Wie aus FIG. 4 ersichtlich ist, kann sich der flexible Bereich 36 im seitlichen Randbereich mit einem Bereich 36a in Fahrtrichtung nach vorne erstrecken, um zu vermeiden, dass der vordere Wasserrinnenbereich 32 auch ganz am Rand verschwenkbar sein muss; vielmehr kann auf diese Weise ein Bereich 32a von der Schwenkbewegung ausgenommen bleiben.

Gemäß FIG. 1 bis 3 kann die hintere Wange 26 der Wasserrinne 22 bis zur Unterseite der hinteren Deckelscheibe 14 hochgezogen sein, um einen Einklemmschutz beim Zurückfahren des vorderen Deckels 12 zu realisieren.

### Bezugszeichenliste

- 10: feste Dachhaut
- 12: vorderer Deckel
- 14: hinterer Deckel
- 16: Verstärkung von 12
- 18: Verstärkung von 14
- 20: Dichtungselement
- 22: Wasserrinne
- 24: vordere Wange von 22
- 26: hintere Wange von 22
- 28: Dichtungselement an 22
- 30: Ausstellhebel
- 32, 32a: vorderer Wasserrinnenabschnitt
- 34: hinterer Wasserrinnenabschnitt
- 36, 36a: flexibler Bereich von 22
- 38: Dachöffnung
- 40: Führungsschiene

## Patentansprüche

1. Fahrzeugdach mit einem eine Dachöffnung (38) wahlweise verschließenden oder mindestens teilweise freigebenden verstellbaren Schließelement (12), und einer Wasserrinne (22), die unterhalb des bezüglich der Fahrtrichtung hinten liegenden Endbereichs (16) des Schließelements 12 angeordnet ist, um eindringendes Wasser aufzufangen und abzuleiten, **dadurch gekennzeichnet, dass** die Wasserrinne (22) einen bezüglich der Fahrtrichtung vorderen Wasserrinnenbereich (32) und einen bezüglich der Fahrtrichtung hinteren Wasserrinnenbereich (34) aufweist, welche mittels eines quer zu der Fahrtrichtung verlaufenden flexiblen wasserundurchlässigen Bereichs (36) verbunden sind, um ein Verschwenken des bezüglich der Fahrtrichtung vorderen Wasserrinnenbereichs (32) gegenüber dem bezüglich der Fahrtrichtung hinteren Wasserrinnenbereich (34) zu ermöglichen.

2. Fahrzeugdach nach Anspruch 1, **dadurch gekennzeichnet, dass** die Wasserrinne (22) im Schnitt U-förmig mit einer Basis und zwei Wangen (24, 26) ausgebildet ist, wobei der flexible Bereich (36) im Bereich der Basis vorgesehen ist.

3. Fahrzeugdach nach Anspruch 1 oder 2, **dadurch gekennzeichnet, dass** der vordere (32) und der hintere Wasserrinnenbereich (34) jeweils als Festbereich ausgebildet ist.

4. Fahrzeugdach nach einem der vorhergehenden Ansprüche, **dadurch gekennzeichnet, dass** der flexible Bereich (36) balgartig ausgebildet ist.

5. Fahrzeugdach nach einem der vorhergehenden Ansprüche, **dadurch gekennzeichnet, dass** der flexible Bereich (36) bezüglich der Fahrtrichtung ungefähr in der Mitte der Wasserrinne (22) angeordnet ist.

6. Fahrzeugdach nach Anspruch 2, **dadurch gekennzeichnet, dass** die Oberseite der bezüglich der Fahrtrichtung vorderen Wange (24) mit einem Dichtungselement (28) zur Anlage an der Unterseite des Schließelements (12) versehen ist.

7. Fahrzeugdach nach einem der vorhergehenden Ansprüche, **dadurch gekennzeichnet, dass** das Schließelement als transparenter Deckel (12) ausgebildet ist, der im bezüglich der Fahrtrichtung hinteren Endbereich mit einer nicht-transparenten Verstärkung (16) versehen ist.

8. Fahrzeugdach nach Anspruch 7, **dadurch gekennzeichnet, dass** die Wasserrinne (22) die Verstärkung (16) untergreift.

9. Fahrzeugdach nach Anspruch 7 oder 8, **dadurch gekennzeichnet, dass** der Deckel (12) als Schiebe-Hebe-Dach-Deckel ausgebildet ist.

10. Fahrzeugdach nach Anspruch 9, **dadurch gekennzeichnet, dass** der vordere Wasserrinnenbereich (32) gegenüber dem hinteren Wasserrinnenbereich (34) durch ein Absenken des hinteren Endbereichs des Deckels (12) nach unten schwenkbar ist.

11. Fahrzeugdach nach Anspruch 10, **dadurch gekennzeichnet, dass** der vordere Wasserrinnenbereich (32) unter das Niveau eines unterhalb des Deckels (12) vorgesehenen Schiebehimmels (42) nach unten schwenkbar ist.

12. Fahrzeugdach nach einem der Ansprüche 9 bis 11, **dadurch gekennzeichnet, dass** beim Anheben des hinteren Endbereichs (16) des Deckels (12) der vordere Wasserrinnenbereich (32) gegenüber dem hinteren Wasserrinnenbereich (34) mittels einer Austelleinrichtung (30) über das Niveau der Dachöffnung (38) nach oben schwenkbar ist, um einen Schwallwasserschutz zu realisieren.

13. Fahrzeugdach nach einem der Ansprüche 9 bis 12, **dadurch gekennzeichnet, dass** die Wasserrinne (22) im Bereich des hinteren Wasserrinnenbereichs (34) in Dachlängsrichtung in einer dachfesten Führung (40) geführt ist.

14. Fahrzeugdach nach einem der vorhergehenden Ansprüche, **dadurch gekennzeichnet, dass** die hintere Begrenzung der Dachöffnung (38) von einem transparenten zweiten Schließelement (14) gebidet wird, das in seinem bezüglich der Fahrtrichtung vorderen Endbereich mit einer nicht-transparenten Verstärkung (18) versehen ist.

15. Fahrzeugdach nach Anspruch 14, **dadurch gekennzeichnet, dass** die Wasserrinne (22) die Verstärkung (18) des zweiten Schließelements (14) untergreift und die bezüglich der Fahrtrichtung hintere Wange (26) der Wasserrinne (22) bis zur Unterseite des zweiten Schließelements (14) hochgezogen ist, um einen Einklemmschutz zu bilden.

16. Fahrzeugdach nach Anspruch 14 oder 15, **dadurch gekennzeichnet, dass** es sich bei dem zweiten Schließelement (14) um ein Festelement handelt.

17. Fahrzeugdach nach Anspruch 14 oder 15, **dadurch gekennzeichnet, dass** es sich bei dem zweiten Schließelement (14) um einen ausstellbaren Deckel handelt.

18. Fahrzeugdach nach einem der vorhergehenden Ansprüche, **dadurch gekennzeichnet, dass** die Wasserrinne (22) aus einem 2-Komponenten-Kunststoff besteht, wobei der vordere Wasserrinnenbereich (32) und der hintere Wasserrinnenbereich (36) aus einem steiferen Material bestehen als der flexible Bereich (36).

## Claims

1. Vehicle roof having a movable closing element (12) that optionally closes or at least partly opens a roof opening (38), and having a water channel (22) which is arranged underneath the end region (16) of the closing element (12) which is located at the rear relative to the direction of travel, in order to catch and discharge penetrating water, **characterized in that** the water channel (22) has a front water channel region (32) relative to the direction of travel and a rear water channel region (34) relative to the direction of travel, which are joined by a flexible, water-impermeable region (36) running transversely relative to the direction of travel, in order to permit pivoting of the front water channel region (32) relative to the direction of travel with respect to the rear water channel region (34) relative to the direction of travel.

2. Vehicle roof according to Claim 1, **characterized in that** the water channel (22) is U-shaped in cross section with a base and two cheeks (24, 26), the flexible region (36) being provided in the region of the base.

3. Vehicle roof according to Claim 1 or 2, **characterized in that** the front (32) and the rear water channel region (34) are in each case formed as a fixed region.

4. Vehicle roof according to one of the preceding claims, **characterized in that** the flexible region (36) is formed in the manner of a bellows.

5. Vehicle roof according to one of the preceding claims, **characterized in that** the flexible region (36) is arranged approximately in the centre of the water channel (22) relative to the direction of travel.

6. Vehicle roof according to Claim 2, **characterized in that** the upper side of the front cheek (24) relative to the direction of travel is provided with a seal element (28) to bear on the underside of the closing element (12).

7. Vehicle roof according to one of the preceding claims, **characterized in that** the closing element is formed as a transparent panel (12) which is provided with a non-transparent reinforcement (16) in the rear end region relative to the direction of travel.

8. Vehicle roof accorded to Claim 7, **characterized in that** the water channel (22) reaches under the reinforcement (16).

9. Vehicle roof according to Claim 7 or 8, **characterized in that** the panel (12) is formed as a tilt-and-slide roof panel.

10. Vehicle roof according to Claim 9, **characterized in that** the front water channel region (32) can be pivoted downwards with respect to the rear water channel region (34) by lowering the rear end region of the panel (12).

11. Vehicle roof according to Claim 10, **characterized in that** the front water channel region (32) can be pivoted downwards below the level of a sliding headlining (42) provided underneath the panel (12).

12. Vehicle roof according to one of Claims 9 to 11, **characterized in that**, when the rear end region (16) of the panel (12) is raised, the front water channel region (32) can be pivoted upwards with respect to the rear water channel region (34), above the level of the roof opening (38), by means of a raising device (38) in order to implement a splash safeguard.

13. Vehicle roof according to one of Claims 9 to 12, **characterized in that** the water channel (22) in the region of the rear water channel region (34) is guided in the roof longitudinal direction in a guide (40) fixed to the roof.

14. Vehicle roof according to one of the preceding claims, **characterized in that** the rear limit of the roof opening (38) is formed by a transparent second closing element (14) which is provided with a non-transparent reinforcement (18) in its front end region relative to the direction of travel.

15. Vehicle roof according to Claim 14, **characterized in that** the water channel (22) reaches under the reinforcement (18) of the second closing element (14) and the rear cheek (26), relative to the direction of travel, of the water channel (22) is drawn up as far as the underside of the second closing element (14) in order to form a safeguard against jamming.

16. Vehicle roof according to Claim 14 or 15, **characterized in that** the second closing element (14) is a fixed element.

17. Vehicle roof according to Claim 14 or 15, **characterized in that** the second closing element (14) is an element that can be raised.

18. Vehicle roof according to one of the preceding claims, **characterized in that** the water channel (22) consists of a 2-component plastic, the front water channel region (32) and the rear water channel region (36) consisting of a more rigid material than the flexible region (36).

## Revendications

1. Toit de véhicule avec un élément de fermeture réglable (12) fermant au choix ou libérant au moins partiellement une ouverture de toit (38), et avec une gouttière (22) qui est placée en-dessous de la zone d'extrémité (16) de l'élément de fermeture (12) reposant à l'arrière par rapport au sens de la marche, afin de collecter et d'évacuer l'eau qui pénètre,
**caractérisé en ce que** la gouttière (22) présente une zone de gouttière avant (32) par rapport au sens de la marche et une zone de gouttière arrière (34) par rapport au sens de la marche qui sont reliées au moyen d'une zone étanche à l'eau (36) flexible s'étendant transversalement par rapport au sens de la marche, afin de permettre un basculement de la zone de gouttière avant (32) par rapport au sens de la marche par rapport à la zone de gouttière arrière (34) par rapport au sens de la marche.

2. Toit de véhicule selon la revendication 1, **caractérisé en ce que** la gouttière (22) est formée en U en section avec une base et deux faces (24, 26), la zone flexible (36) étant prévue au niveau de la base.

3. Toit de véhicule selon la revendication 1 ou 2, **caractérisé en ce que** les zones de gouttière avant (32) et arrière (34) sont conçues respectivement en tant que zone fixe.

4. Toit de véhicule selon l'une quelconque des revendications précédentes, **caractérisé en ce que** la zone flexible (36) est en forme de soufflet.

5. Toit de véhicule selon l'une quelconque des revendications précédentes, **caractérisé en ce que** la zone flexible (36) est placée environ au centre de la gouttière (22) par rapport au sens de la marche.

6. Toit de véhicule selon la revendication 2, **caractérisé en ce que** le côté supérieur de la face avant (24) par rapport au sens de la marche est muni d'un joint d'étanchéité (28) destiné à être placé sur le côté inférieur de l'élément de fermeture (12).

7. Toit de véhicule selon l'une quelconque des revendications précédentes, **caractérisé en ce que** l'élément de fermeture est conçu comme un couvercle transparent (12) qui est muni d'un renfort non transparent (16) dans la zone d'extrémité arrière par rapport au sens de la marche.

8. Toit de véhicule selon la revendication 7, **caractérisé en ce que** la gouttière (22) engage le renfort (16).

9. Toit de véhicule selon la revendication 7 ou 8, **caractérisé en ce que** le couvercle 12 est conçu en tant que couvercle de toit qui se glisse et se soulève.

10. Toit de véhicule selon la revendication 9, **caractérisé en ce que** la zone de gouttière avant (32) peut être pivotée vers le bas par rapport à la zone de gouttière arrière (34) par un abaissement de la zone d'extrémité arrière du couvercle (12).

11. Toit de véhicule selon la revendication 10, **caractérisé en ce que** la zone de gouttière avant (32) peut être pivotée vers le bas sous le niveau d'un pavillon coulissant (42) prévu sous le couvercle (12).

12. Toit de véhicule selon l'une quelconque des revendications 9 à 11, **caractérisé en ce que** lorsque l'on soulève la zone d'extrémité arrière (16) du couvercle (12), la zone de gouttière avant (32) peut être pivotée vers le haut par rapport à la zone de gouttière arrière (34) au moyen d'un dispositif de positionnement (30) au-dessus du niveau de l'ouverture de toit (38), afin de réaliser une protection contre les jets d'eau.

13. Toit de véhicule selon l'une quelconque des revendications 9 à 12, **caractérisé en ce que** la gouttière (22) au niveau de la zone de gouttière arrière (34) est dirigée dans le sens longitudinal du toit dans un rail (40) solidaire sur le toit.

14. Toit de véhicule selon l'une des revendications précédentes, **caractérisé en ce que** la délimitation arrière de l'ouverture de toit (38) est formée par un deuxième élément de fermeture transparent (14) qui est muni d'un renfort non transparent (18) dans sa zone d'extrémité avant par rapport au sens de la marche.

15. Toit de véhicule selon la revendication 14, **caractérisé en ce que** la gouttière (22) engage le renfort (18) du deuxième élément de fermeture (14) et la face arrière (26) de la gouttière (22) par rapport au sens de la marche est tirée vers le haut jusqu'au côté inférieur du deuxième élément de fermeture (14) afin de former une protection de serrage.

16. Toit de véhicule selon la revendication 14 ou 15, **caractérisé en ce qu'**il s'agit pour le deuxième élément de fermeture (14) d'un élément fixe.

17. Toit de véhicule selon la revendication 14 ou 15, **caractérisé en ce qu'**il s'agit pour le deuxième élément de fermeture (14) d'un couvercle réglable.

18. Toit de véhicule selon l'une des revendications précédentes, **caractérisé en ce que** la gouttière (22) est composée d'un plastique bi-composants, la zone de gouttière avant (32) et la zone de gouttière arrière (34) étant composées d'un matériau plus rigide que la zone flexible (36).
